# EUROPÄISCHE PATENTSCHRIFT

(11) **EP 1 012 118 B1**
(45) Veröffentlichungstag und Bekanntmachung des Hinweises auf die Patenterteilung: **12.12.2001**
(21) Anmeldenummer: 98941328.1
(22) Anmeldetag: 14.07.1998
(51) Int. Cl.: C02F 1/32, H01R 33/08

(54) **EINRICHTUNG ZUM ENTKEIMEN VON WASSER, WELCHES EINE SANITÄREINRICHTUNG DURCHSTRÖMT**
DEVICE FOR DEGERMINATING WATER PASSING THROUGH A SANITARY DEVICE
DISPOSITIF PERMETTANT DE DEGERMER L'EAU QUI S'ECOULE PAR UN EQUIPEMENT SANITAIRE

(30) Priorität: 22.08.1997 DE 19736631
(43) Veröffentlichungstag der Anmeldung: 28.06.2000
(73) Patentinhaber: HANSA METALLWERKE AG, 70567 Stuttgart (DE)
(72) Erfinder: KUNKEL, Horst, D-70499 Stuttgart (DE)
(74) Vertreter: Ostertag, Ulrich, Dr.
(86) Internationale Anmeldenummer: EP9804373
(87) Internationale Veröffentlichungsnummer: WO9910282

(56) Entgegenhaltungen:
- EP-A- 0 616 975
- EP-A- 0 757 513
- US-A- 5 422 487
- US-A- 5 600 208

## Beschreibung

Die Erfindung betrifft eine Einrichtung zum Entkeimen von Wasser, welches eine Sanitäreinrichtung durchströmt, mit
a) einem Gehäuse, welches einen Einlaß und einen Auslaß für das Wasser aufweist;
b) einer UV-Lampe, die innerhalb des Gehäuses angeordnet ist und deren Strahlung auf das durchströmende Wasser gerichtet ist;
c) einem Anschlußsockel, der mit einer externen Stromquelle verbindbar ist und eine Aufnahmeöffnung aufweist, in welche ein Sockelbereich der UV-Lampe einführbar ist, wobei Aufnahmeöffnung und Sockelbereich Kontakte aufweisen, die in der Funktionsstellung der Uv-Lampe aneinander anliegen.

In den letzten Jahren sind die Gefahren, die von mit Mikroorganismen, insbesondere Bakterien, Amöben oder anderen Einzellern, verunreinigtem Wasser im Sanitärbereich ausgehen, zunehmend deutlicher geworden. Der Entkeimung von Wasser wird daher eine erhöhte Bedeutung beigemessen. In diesem Zusammenhang wurde von Versuchen berichtet, strömendes Wasser durch Bestrahlung mit UV-Licht zu entkeimen, dessen Wellenlänge geeignet ist, im Wasser mitgeführte Mikroorganismen abzutöten. Zur Verzögerung der Verweilzeit dieser Mikroorganismen im Bereich der UV-Lampe kann eine zusätzliche Filtervorrichtung eingesetzt werden. Die aus den genannten Versuchen bekannten Einrichtungen der eingangs genannten Art wiesen nunmehr zum Anschluß der UV-Lampe einen Anschlußsockel auf, dessen Kontakte eine direkte oder mittelbar galvanische Verbindung mit der externen Stromquelle aufwiesen. Wenn also zum Austausch der UV-Lampe das Gehäuse der Einrichtung geöffnet werden mußte, bestand die Gefahr, daß die Kontakte unter Spannung standen, wenn die externe Stromquelle nicht abgeschaltet oder abgetrennt worden war. Deshalb und wegen der grundsätzlichen in der Psychologie von Sanitärinstallateuren liegenden Hemmung, mit elektrischen Geräten umzugehen, waren die Versuchsaufbauten der eingangs genannten Einrichtungen für den praktischen Einsatz ungeeignet.

Aufgabe der vorliegenden Erfindung ist es, eine Einrichtung der eingangs genannten Art so auszugestalten, daß ein Kontakt mit spannungsführenden Teilen im Betrieb und während der Reparatur oder Wartung der Einrichtung mit Sicherheit unmöglich ist und daher Bedenken gegen die Handhabung dieser Einrichtungen seitens Personen, die den Umgang mit Elektrizität nicht gewohnt sind, ausgeräumt sind.

Diese Aufgabe wird erfindungsgemäß dadurch gelöst, daß
d) der Anschlußsockel in zwei lösbare zusammensteckbare Teile unterteilt ist, von denen das eine an dem Gehäuse befestigt ist und das andere die Aufnahmeöffnung aufweist;
e) die beiden Teile des Anschlußsockels jeweils eine Spule enthalten, welche bei zusammengestecktem Sockel einander benachbart sind, wobei die Spule in dem an dem Gehäuse befestigten Teil mit der externen Stromquelle verbindbar ist und die Spule in dem anderen Teil direkt oder mittelbar mit den Kontakten der Aufnahmeöffnung dieses Teiles verbunden ist,
   wobei
f) die Aufnahmeöffnung des Anschlußsockels gegen den Sockelbereich der UV-Lampe abgedichtet ist.

Erfindungsgemäß besteht also zwischen den Kontakten in der Aufnahmeöffnung des Anschlußsockels und der externen Stromquelle keine - auch keine mittelbare - galvanische Verbindung. Die Energieüberkopplung vom einen Teil des Anschlußsockels zum anderen geschieht vielmehr ausschließlich induktiv nach Art eines Transformators, wobei Primär- und Sekundärwicklung dieses "Transformators" auf unterschiedlichen Teilen des Anschlußsockels liegen. Wird bei dieser erfindungsgemäßen Ausbildung der am Gehäuse befestigte Teil des Anschlußsockels entfernt, so liegen an diesem keinerlei Kontakte frei. Auch wenn die externe Stromquelle von diesem ersten Teil des Anschlußsockels nicht abgekoppelt ist, können hiervon keinerlei Gefahren ausgehen. Mit dem Trennen der beiden Teil des Anschlußsockels wird sofort der zweite Teil des Anschlußsockels spannungsfrei, einschließlich der in dessen Aufnahmeöffnung angeordneten Kontakte. Wer immer nunmehr Wartungsarbeiten im Inneren der Einrichtung durchführt, beispielsweise die UV-Lampe austauscht, muß nicht befürchten, mit stromführenden Teilen in Verbindung zu kommen. Hierdurch entsteht beim Benutzer das Gefühl großer Sicherheit, welches insbesondere bei wasserführenden Einrichtungen psychologisch von nicht zu unterschätzender Bedeutung ist.

Die Verbindung der beiden Teile des Anschlußsockels kann beispielsweise so geschehen, daß das eine dieser beiden Teile einen zylindrischen Hals aufweist, der in zusammengestecktem Zustand des Anschlußsockels in eine komplementäre Ausnehmung des anderen Teils hineinragt. Die beiden Teile erhalten auf diese Weise die "typische" Ausgestaltung eines männlichen und weiblichen Steckerteiles. Aufgrund der rotationssymmetrischen Verbindung der beiden Teile des Anschlußsockels ist auch eine Verdrehung desjenigen Gehäuseteiles, z.B. eines Bodens, möglich, an welchem das eine Teil des Anschlußsockels befestigt ist. Eine solche Verdrehung kann dann sinnvoll sein, wenn das fragliche Gehäuseteil z.B. mittels einer Schraubverbindung an dem restlichen Gehäuse lösbar befestigt ist.

Zweckmäßigerweise sind die beiden Spulen in den beiden Teilen des Anschlußsockels in dessen zusammengesetztem Zustand koaxial zueinander, die eine innerhalb der anderen, angeordnet. Dies ergibt den besten Wirkungsgrad der induktiven Energieübertragung.

Es empfiehlt sich ferner, daß die beiden Spulen in den jeweiligen Teilen des Anschlußsockels eingekapselt, insbesondere eingegossen, sind. Auf diese Weise sind die Spulen, die ohnehin nicht reparaturbedürftig sind und daher auch nicht zugänglich zu sein brauchen, zuverlässig gegen das Wasser innerhalb der Einrichtung abgeschirmt.

Zum Betrieb einer UV-Lampe werden normalerweise besondere Spannungen benötigt, die von einer gesonderten Steuerungselektronik bereitgestellt werden. Deshalb wird eine Ausgestaltung der Erfindung besonders bevorzugt, bei welcher das die Aufnahmeöffnung enthaltende Teil des Anschlußsockels eine Steuerungselektronik enthält, deren Eingang mit der Spule in diesem Teil und deren Ausgang mit den Kontakten der Aufnahmeöffnung verbunden ist. Die heute sehr klein herstellbare Steuerungselektronik ist auf diese Weise also in demjenigen Teil des Anschlußsockels integriert, der beim Öffnen des Gehäuses automatisch spannungsfrei wird.

Auch die Steuerungselektronik ist bei der heute üblichen Qualität so wartungsfrei, daß sie in dem entsprechenden Teil des Aufnahmegehäuses eingekapselt, insbesondere eingegossen, sein kann.

Zur Verstärkung der Wirkung der UV-Lampe auf die im Wasser befindlichen Mikroorganismen kann in dem Gehäuse eine Filtervorrichtung angeordnet sein, die von dem Wasser auf dem Wege zwischen dem Einlaß und dem Auslaß des Gehäuses durchströmt und vom Licht der UV-Lampe bestrahlbar ist. Diese Filtervorrichtung hält die Mikroorganismen beim Durchströmen des Wassers zurück, so daß sie sich länger im für sie tödlichen Licht der UV-Lampe befinden.

Schließlich wird eine Ausgestaltung der Erfindung bevorzugt, bei der zwischen dem dem Anschlußsockel abgewandten Ende der UV-Lampe und dem diesem benachbarten Bereich des Gehäuses ein elastisches Polster angeordnet ist. Dieses elastische Polster drückt schonend einerseits die UV-Lampe mit ihrem Sockelbereich in die Aufnahmeöffnung des Anschlußsockels und andererseits das die Aufnahmeöffnung aufweisende Teil des Anschlußsockels gegen das andere, an dem Gehäuse befestigten Teil.

Ausführungsbeispiele der Erfindung werden nachfolgend anhand der Zeichnung näher erläutert; es zeigen
- Figur 1:: einen Axialschnitt durch eine Einrichtung zum Entkeimen und Filtrieren von Wasser, die in einer Sanitärarmatur untergebracht werden kann;
- Figur 2:: eine Teilvergrößerung aus Figur 1;
- Figur 3:: einen Schnitt gemäß Linie III-III von Figur 1;
- Figur 4:: einen Schnitt gemäß Linie IV-IV von Figur 1;
- Figur 5:: einen Schnitt gemäß Linie V-V von Figur 1.

Die in der Zeichnung dargestellte Einrichtung zur Entkeimung und Filtrierung von Wasser ist dazu bestimmt, in einen Wasserkanal einer sanitären Armatur eingesetzt zu werden. Alle Abmessungen sind also derart, daß sie in einem solchen Durchströmungskanal Platz finden. Die Einrichtung, die insgesamt mit dem Bezugszeichen 1 gekennzeichnet ist, umfaßt einen im wesentlichen zylindrischen Gehäusemantel 2, welcher an den gegenüberliegenden Stirnseiten durch einen Boden 3 und einen Deckel 4 verschlossen ist. Die Verbindung zwischen dem Gehäusemantel 2 und dem Boden 3 bzw. dem Deckel 4 geschieht bei dem dargestellten Ausführungsbeispiel mit Hilfe von Gewinden 5, 6, so daß der Innenraum des Gehäusemantels 2 nach Abnehmen dieser Bauteile zugänglich ist.

In einer Ausnehmung 7 an der Innenseite des Bodens 3 ist mit Hilfe von Schrauben 8, 9 ein Anschlußsockel 10 befestigt, welcher der Aufnahme einer langgestreckten UV-Lampe 12 dient.

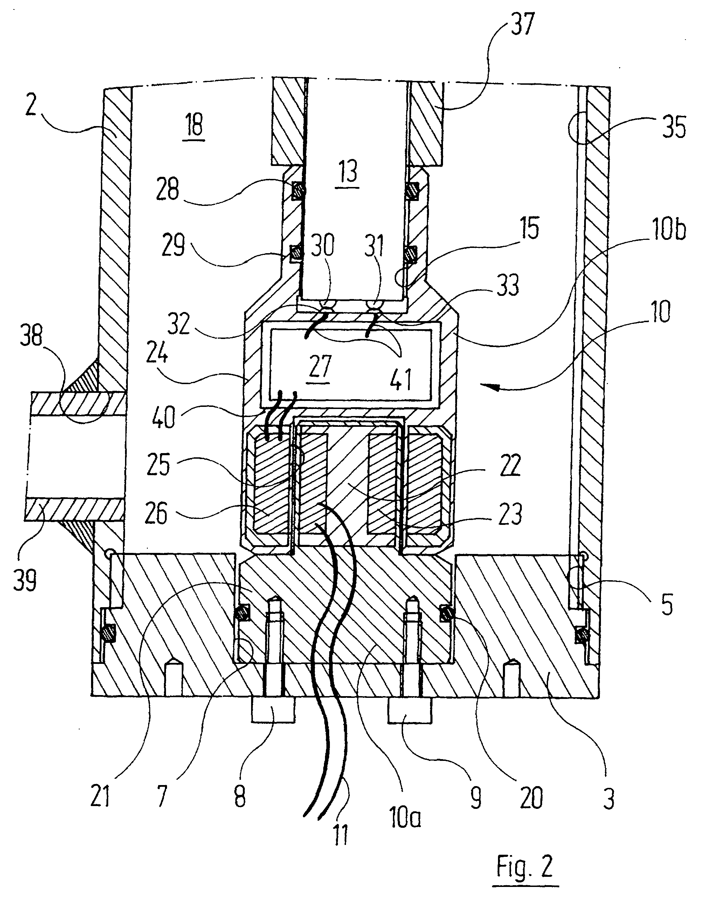

Die nähere Ausgestaltung des Anschlußsockels 10 ist in Figur 2 dargestellt. Er ist aus zwei ineinander gesteckten Teilen 10a, 10b zusammengesetzt. Das stationäre, in der Ausnehmung 7 des Bodens 3 mit den Schrauben 8, 9 befestigte Teil 10a ist gegen die Wand der Ausnehmung 7 durch einen 0-Ring 20 abgedichtet. An den im wesentlichen innerhalb der Ausnehmung 7 untergebrachten Grundkörper 21 des Anschlußsockel-Teiles 10a ist koaxial ein zylindrischer Hals 22 angeformt, in welchem eine erste Spule 23, die als Primärwicklung eines Transformators dient, koaxial eingekapselt ist. Diese erste Spule ist über Leitungen 11 mit einer externen, nicht dargestellten Stromquelle verbunden.

Das auf das erste Anschlußsockel-Teil 10a aufgesteckte zweite Anschlußsockel-Teil 10b umfaßt einen im wesentlichen zylindrischen Hauptkörper 24, in welchen von unten her eine zylindrische Ausnehmung 25 eingeformt ist. Die Abmessungen der Ausnehmung 25 sind geringfügig größer als die Abmessungen des Halses 22 des stationären Anschlußsockel-Teiles 10a, derart, daß die beiden Anschlußsockel-Teile 10a, 10b in der in Figur 2 gezeigten Weise gut passend zusammengesteckt werden können.

In dem die Ausnehmung 25 umgebenden Bereich ist innerhalb des zylindrischen Hauptkörpers 24 des abnehmbaren Anschlußsockel-Teiles 10b eine zweite Spule 26, koaxial zur ersten Spule 23 und diese umgebend, verkapselt, welche als Sekundärwicklung des bereits erwähnten Transformators dient. Oberhalb der Ausnehmung 25 und oberhalb der zweiten Spule 26 ist innerhalb des zylindrischen Hauptkörpers 24 eine Steuerungselektronik 27 untergebracht, welche über Leitungen 40 mit der zweiten Spule 26 in Verbindung steht. Die Steuerungselektronik 27, welche ebenfalls in den zylindrischen Hauptteil 24 des abnehmbaren Anschlußsockel-Teiles 10b eingekapselt ist, erzeugt aus der Ausgangsspannung der zweiten Spule 26 diejenigen elektrischen Spannungen, die zum Betrieb der UV-Lampe 12 erforderlich sind.

Oberhalb des Hauptkörpers 24 umfaßt der abnehmbare Anschlußsockel-Teil 10b eine zylindrische, nach oben offene Aufnahmeöffnung 15 für den Sockelbereich 13 der UV-Lampe 12. Der Sockelbereich 13 der UV-Lampe 12 und die Aufnahmeöffnung 15 sind nach Art eines Bajonettverschlusses (nicht dargestellt) miteinander verbunden und durch 0-Ringe 28, 29 gegeneinander abgedichtet. In der montierten Stellung der UV-Lampe 12 liegen deren Kontakte 30, 31 an Kontakten 32, 33 am Boden der Aufnahmeöffnung 15 an, welche über Leitungen 41 mit der Steuerungselektronik 27 verbunden sind.

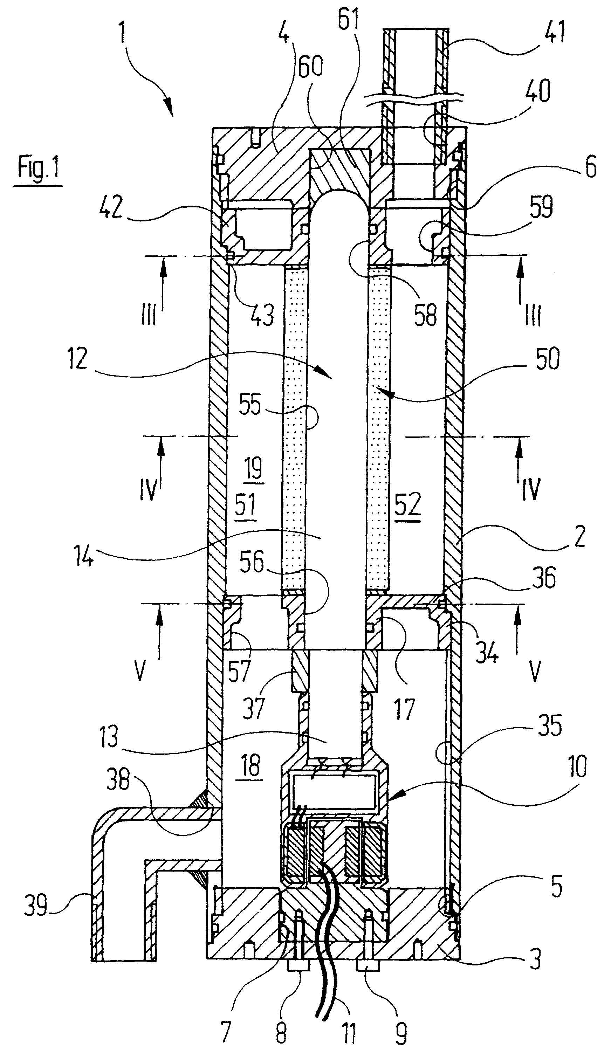

Im Innenraum des Gehäuses 2, 3, 4 ist eine erste Zwischenplatte 17 fixiert, die von unten her in das Gehäuse 2, 3, 4 eingeschoben ist, wobei zur Bestimmung der Drehlage eine radial vorstehende Rippe 34 in eine Nut 35 an der Innenwandung des Gehäusemantels 2 eingeführt ist. Die erste Zwischenplatte 17 liegt nach oben hin an einer kleine Stufe 36 der Innenwandung des Gehäusemantels 2 an (vgl. Figur 1). Nach unten hin stützt sich die erste Zwischenplatte 17 über ein Abstandsstück 37 an dem Anschlußsockel 10 ab.

Durch die erste Zwischenplatte 17 wird der Innenraum des Gehäuses 2, 3, 4 in einen Zuströmraum 18 und in einen Behandlungsraum 19 unterteilt. Der Zuströmraum 18 umgibt im wesentlichen den mit dem Boden 3 verbundenen Anschlußsockel 10, während der Behandlungsraum 19 den Leuchtkörper 14 der UV-Lampe 12 umgibt. In einer seitlichen, den zylindrischen Gehäusemantel 2 durchsetzenden Öffnung 38 ist ein abgewinkelter Anschlußstutzen 39 eingeschweißt, welcher der Zufuhr von Wasser in den Zuströmraum 18 des Gehäuses 2, 3, 4 dient. Im Deckel 4 ist eine achsparallele Bohrung 40 vorgesehen, in welche ein Auslaufstutzen 41 eingeschraubt ist, über welchen das gereinigte Wasser die Einrichtung 1 wieder verläßt.

Im oberen Bereich des Gehäuses 2, 3, 4 ist, unterhalb des Deckels 4, eine zweite Zwischenplatte 42 in ähnlicher Weise befestigt, wie dies oben für die erste Zwischenplatte 17 beschrieben ist. Allerdings ist diese zweite Zwischenplatte 42 von oben her in das Gehäuse 2, 3, 4 eingeführt. Sie wird vom Deckel 4 gegen eine Stufe 43 an der Innenwandung des Gehäusemantels 2 angedrückt.

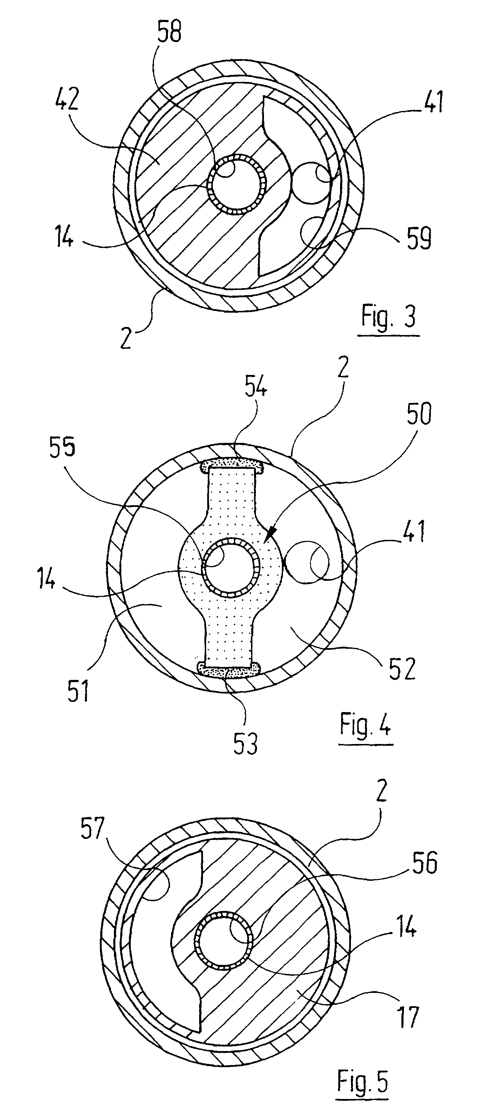

In dem zwischen den beiden Zwischenplatten 17 und 42 liegenden Bereich ist der Leuchtkörper 14 der UV-Lampe 12 von einer Filtervorrichtung umgeben, die insgesamt das Bezugszeichen 50 trägt. Beim dargestellten Ausführungsbeispiel besteht die Filtervorrichtung aus einem Sinterkörper 50 aus geeignetem Material, der die in Figur 4 gezeigte Konfiguration aufweist: Er hat im wesentlichen die Form einer Wand, welche den Innenraum des Gehäuses 2, 3, 4 in zwei gegenüberliegende Hälften 51, 52 unterteilt. Zur Abdichtung dieser beiden Teilräume 51, 52 liegen die Längsränder des Sinterkörpers 50 über Formdichtungen 53, 54 an der Innenwandung des Gehäusemantels 2 an. Der gesamte Sinterkörper 50 ist von einer axialen Durchgangsbohrung 55 durchzogen, in welcher der Leuchtkörper 14 der UV-Lampe 12 aufgenommen ist.

Wie der Figur 5 zu entnehmen ist, besitzt die erste Zwischenplatte 17 eine mittlere Durchangsöffnung 56, welche den unteren Bereich des Leuchtkörpers 14 der UV-Lampe 12 aufnimmt, sowie eine ringsegmentförmige Öffnung 57, welche in montiertem Zustand mit dem Teilraum 51 innerhalb des Gehäuses 2, 3, 4 kommuniziert.

In ähnlicher Weise ist die zweite Zwischenplatte 42 mit einer mittleren Durchgangsöffnung 58 versehen, in welche das obere Ende des Leuchtkörpers 14 der UV-Lampe 12 eingeschoben ist; eine ringsegmentförmige Öffnung 59 kommuniziert auf der einen Seite mit dem zweiten Teilraum 52 innerhalb des Gehäuses 2, 3, 4 und auf der anderen Seite mit dem Auslaufstutzen 41.

In eine mittlere Ausnehmung 60 des Deckels 40 schließlich ist ein elastisches Polster 61 eingesetzt, in welches das obere Ende des Leuchtkörpers 14 der UV-Lampe 12 eingedrückt ist, so daß die UV-Lampe 12 innerhalb der Einrichtung 1 schonend fixiert ist.

Die oben beschriebene Einrichtung 1 arbeitet wie folgt:

Wird die Sanitäreinrichtung, beispielsweise eine Auslaufarmatur, in deren Durchströmungskanal die Einrichtung 1 eingebaut ist, geöffnet, so fließt Wasser über den Anschlußstutzen 21 in den Zuströmraum 18 innerhalb des Gehäuses 2 ein. Die UV-Lampe 12 wird eingeschaltet. Das in den Zuströmraum 18 gelangte Wasser fließt von dort weiter über die ringsegmentförmige Öffnung 57 in der ersten Zwischenplatte 17 in den ersten Teilraum 51 des Behandlungsraumes 19 und durchtritt den Sinterkörper 50, wobei die in ihm enthaltenen auszufiltrierenden Teilchen, insbesondere aber Mikroorganismen wie Amöben und ähnliche Einzeller, von dem Sinterkörper 50 zurückgehalten werden. Das so gereinigte Wasser gelangt in den zweiten Teilraum 52 des Behandlungsraumes 19 und fließt aus diesem durch die ringsegmentförmige Öffnung 59 der zweiten Zwischenplatte 42 und durch den Auslaßstutzen 41 ab und von dort zum nicht dargestellten Auslauf der Sanitäreinrichtung.

Beim Durchgang durch die Behandlungskammer 19 ist das Wasser den desinfizierenden Strahlen der UV-Lampe 12 ausgesetzt. Die in dem Filterkörper 50 abgeschiedenen Mikroorganismen werden unter dem Einfluß der UV-Strahlung abgetötet.

Muß die UV-Lampe 12 nach einer bestimmten Betriebsdauer ausgestauscht werden oder muß die Einrichtung 1 aus anderem Grunde gewartet werden, so kann dies folgendermaßen geschehen:

Der Boden 3 wird vom Gehäusemantel 2 der Einrichtung 1 abgeschraubt, wobei sich der mit dem Boden 3 verbundene erste Anschlußsockel-Teil 10b vom zweiten Anschlußsockel-Teil 10a trennt. Die gesamte Innenausstattung der Einrichtung 1, insbesondere also die zweite Spule 26, die Steuerungselektronik 27 und die Kontakte 32, 33 werden dabei sofort spannungslos. Auch von dem stationären Anschlußsokkel-Teil 10, das nunmehr freiliegt, kann keine Gefahr ausgehen, da die erste Spule 23 in diesem eingekapselt ist.

Nach dem Entfernen des Bodens 3 mit dem stationären Anschlußsockel-Teil 10a kann das zweite Anschlußsockel-Teil 10b mit der UV-Lampe 12 nach unten herausgezogen werden. Der Austausch der UV-Lampe 12 ist nunmehr "im Trockenen" gefahrlos möglich. Der Wiederzusammenbau der Einrichtung 1 geschieht in der umgekehrten Reihenfolge.

Soll Zugang zu dem Sinterkörper 50 gewonnen werden, z.B. wenn dieser sich nach einer bestimmten Betriebszeit mit abgeschiedenen Verunreinigungen zugesetzt hat, kann dies auch "von oben" her erfolgen, indem der Deckel 4 abgeschraubt wird. Dann kann die zweite Zwischenplatte 42 nach oben herausgenommen werden, worauf der Sinterkörper 50 freiliegt. Dieser kann nun nach oben in der Sicht der Figur 1 über den Leuchtkörper 14 der UV-Lampe 12 abgezogen werden. Die Wiedermontage geschieht in umgekehrter Reihenfolge.

## Patentansprüche

1. Einrichtung zum Entkeimen von Wasser, welches eine Sanitäreinrichtung durchströmt, mit
a) einem Gehäuse, welches einen Einlaß und einen Auslaß für das Wasser aufweist;
b) einer UV-Lampe, die innerhalb des Gehäuses angeordnet ist und deren Strahlung auf das durchströmende Wasser gerichtet ist;
c) einem Anschlußsockel, der mit einer externen Stromquelle verbindbar ist und eine Aufnahmeöffnung aufweist, in welche ein Sockelbereich der UV-Lampe einführbar ist, wobei Aufnahmeöffnung und Sockelbereich Kontakte aufweisen, die in der Funktionsstellung der UV-Lampe aneinander anliegen,
**dadurch gekennzeichnet, daß**
d) der Anschlußsockel (10) in zwei lösbar zusammensteckbare Teile (10a, 10b) unterteilt ist, von denen das eine an dem Gehäuse (2, 3, 4) befestigt ist und das andere die Aufnahmeöffnung (15) aufweist;
e) die beiden Teile (10a, 10b) des Anschlußsockels (10) jeweils eine Spule (23, 26) enthalten, welche bei zusammengestecktem Sockel (10) einander benachbart sind, wobei die Spule (23) in dem an dem Gehäuse (2, 3, 4) befestigten Teil (10a) mit der externen Stromquelle verbindbar ist und die Spule (26) in dem anderen Teil (10b) direkt oder mittelbar mit den Kontakten (32, 33) der Aufnahmeöffnung (15) dieses Teils (10b) verbunden ist;
wobei
f) die Aufnahmeöffnung (15) des Anschlußsockels (10) gegen den Sockelbereich (13) der UV-Lampe abgedichtet ist.

2. Einrichtung nach Anspruch 1, **dadurch gekennzeichnet,**
**daß** eines der beiden Teile (10a) des Anschlußsockels (10) einen zylindrischen Hals (22) aufweist, der in zusammengestecktem Zustand des Anschlußsockels (10) in eine komplementäre Ausnehmung (25) des anderen Teils (10b) hineinragt.

3. Einrichtung nach Anspruch 1 oder 2, **dadurch gekennzeichnet, daß** die beiden Spulen (23, 26) in den beiden Teilen (10a, 10b) des Anschlußsockels (10) in dessen zusammengesetztem Zustand koaxial zueinander, die eine innerhalb der anderen, angeordnet sind.

4. Einrichtung nach einem der vorhergehenden Ansprüche,
**dadurch gekennzeichnet, daß** die beiden Spulen (23, 26) in dem jeweiligen Teil (10a, 10b) des Anschlußsockels (10) eingekapselt, insbesondere eingegossen, sind.

5. Einrichtung nach einem der vorhergehenden Ansprüche,
**dadurch gekennzeichnet, daß** das die Aufnahmeöffnung (15) enthaltende Teil (10b) des Anschlußsockels (10) eine Steuerungselektronik (27) enthält, deren Eingang mit der Spule (26) in diesem Teil (10b) und deren Ausgang mit den Kontakten (32, 33) der Aufnahmeöffnung (15) verbunden ist.

6. Einrichtung nach Anspruch 5, **dadurch gekennzeichnet,**
**daß** die Steuerungselektronik (27) in dem entsprechenden Teil (10b) des Anschlußsockels (10) eingekapselt, insbesondere eingegossen, ist.

7. Einrichtung nach einem der vorhergehenden Ansprüche,
**dadurch gekennzeichnet, daß** in dem Gehäuse (2, 3, 4) eine Filtervorrichtung (50) angeordnet ist, die von dem Wasser auf dem Wege zwischen dem Einlaß (39) und dem Auslaß (41) des Gehäuses (2, 3, 4) durchströmt und vom Licht der UV-Lampe (12) bestrahlbar ist.

8. Einrichtung nach einem der vorhergehenden Ansprüche,
**dadurch gekennzeichnet, daß** zwischen dem dem Anschlußsockel (10) abgewandten Ende der UV-Lampe (12) und dem diesem benachbarten Bereich (4) des Gehäuses (2, 3, 4) ein elastisches Polster (61) angeordnet ist.

## Claims

1. Device for sterilizing water flowing through a sanitary appliance, comprising
a) a housing, which has an inlet and an outlet for the water;
b) a UV lamp, which is disposed inside the housing and the radiation of which is directed towards the water flowing through;
c) a connection backplate, which is connectable to an external current source and comprises a location opening, into which a cap region of the UV lamp is insertable, wherein location opening and cap region have contacts, which lie against one another in the operative position of the UV lamp,
**characterized in that**
d) the connection backplate (10) is subdivided into two releasably intermatable parts (10a, 10b), of which one is fastened to the housing (2, 3, 4) and the other has the location opening (15);
e) the two parts (10a, 10b) of the connection backplate (10) each contain a coil (23, 26), which coils are adjacent to one another in the intermated state of the backplate (10), wherein the coil (23) in the part (10a) fastened to the housing (2, 3, 4) is connectable to the external current source and the coil (26) in the other part (10b) is connected directly or indirectly to the contacts (32, 33) of the location opening (15) of said part (10b);
wherein
f) the location opening (15) of the connection backplate (10) is sealed off from the cap region (13) oil the UV lamp.

2. Device according to claim 1, **characterized in that** one of the two parts (10a) of the connection backplate (10) has a cylindrical neck (22) which, in the intermated state of the connection backplate (10), projects into a complementary recess (25) of the other part (10b).

3. Device according to claim 1 or 2, **characterized in that** the two coils (23, 26) in the two parts (10a, 10b) of the connection backplate (10) are disposed, in the intermated state of the latter, coaxially with one another, the one inside the other.

4. Device according to one of the preceding claims, **characterized in that** the two coils (23, 26) are enclosed, in particular encapsulated, in the respective part (10a, 10b) of the connection backplate (10).

5. Device according to one of the preceding claims, **characterized in that** the part (10b) of the connection backplate (10) containing the location opening (15) comprises an electronic control device (27), the input of which is connected to the coil (26) in said part (10b) and the output of which is connected to the contacts (32, 33) of the location opening (15).

6. Device according to claim 5, **characterized in that** the electronic control device (27) is enclosed, in particular encapsulated, in the corresponding part (10b) of the connection backplate (10).

7. Device according to one of the preceding claims, **characterized in that** disposed in the housing (2, 3, 4) is a filter apparatus (50), through which the water flows on its way between the inlet (39) and the outlet (41) of the housing (1, 2, 3) and which is irradiatable by the light of the UV lamp (12).

8. Device according to one of the preceding claims, **characterized in that** an elastic pad (61) is disposed between the end of the UV lamp (12) remote from the connection backplate (10) and the region of the housing (2, 3, 4) adjacent to said end.

## Revendications

1. Dispositif pour dégermer l'eau s'écoulant à travers un équipement sanitaire, comportant
a) un boîtier qui présente une entrée et une sortie pour l'eau,
b) une lampe à ultraviolets qui est disposée à l'intérieur du boîtier et dont le rayonnement est dirigé sur l'eau qui circule,
c) un culot de raccordement, qui peut être relié à une source de courant externe et qui comporte une ouverture de réception dans laquelle peut être introduite une zone de culot de la lampe à ultraviolets, l'ouverture de réception et la zone de culot étant pourvues de contacts qui, en position de fonctionnement de la lampe à ultraviolets, reposent les uns contre les autres,
**caractérisé en ce que**
d) le culot de raccordement (10) est divisé en deux parties amovibles pouvant s'emboîter (10a, 10b), dont l'une est fixée au boîtier (2, 3, 4), et l'autre présente l'ouverture de réception (15),
e) les deux parties (10a, 10b) du culot de raccordement (10) contiennent respectivement une bobine (23, 26), qui, à l'état assemblé du culot (10) sont voisines l'une de l'autre, la bobine (23) dans la partie (10a) fixée au boîtier (2, 3, 4) pouvant être connectée à la source de courant externe, et la bobine (26) dans l'autre partie (10b) étant reliée directement ou indirectement aux contacts (32, 33) de l'ouverture de réception (15) de cette partie (10b),
f) l'ouverture de réception (15) du culot de raccordement (10) étant ce faisant étanchéifiée par rapport à la zone du culot (13) de la lampe à ultraviolets.

2. Dispositif selon la revendication 1, **caractérisé en ce que** l'une des deux parties (10a) du culot de raccordement (10) comporte un col cylindrique (22) qui, à l'état assemblé du culot de raccordement (10), s'engage dans un logement complémentaire (25) de l'autre partie (10b).

3. Dispositif selon la revendication 1 ou 2, **caractérisé en ce que** les deux bobines (23, 26) dans les deux parties (10a, 10b) du culot de raccordement (10), à l'état assemblé de celui-ci, sont disposées de façon réciproquement coaxiale, l'une dans l'autre.

4. Dispositif selon l'une quelconque des revendications précédentes, **caractérisé en ce que** les deux bobines (23, 26) sont encapsulées dans la partie respective (10a, 10b) du culot de raccordement (10), en particulier **en ce qu'**elles y sont coulées.

5. Dispositif selon l'une quelconque des revendications précédentes, **caractérisé en ce que** la partie (10b) logeant l'ouverture de réception (15) du culot de raccordement (10) renferme un dispositif de commande électronique (27), dont l'entrée est reliée à la bobine (26) dans cette partie (10b) et dont la sortie est reliée aux contacts (32, 33) de l'ouverture de réception (15).

6. Dispositif selon la revendication 5, **caractérisé en ce que** le dispositif de commande électronique (27) est encapsulé dans la partie correspondante (10b) du culot de raccordement (10), en particulier **en ce qu'**il y est coulé.

7. Dispositif selon l'une quelconque des revendications précédentes, **caractérisé en ce qu'**un dispositif de filtration (50) est disposé dans le boîtier (2, 3, 4), qui est traversé par l'eau sur le parcours formé entre l'entrée (39) et la sortie (41) du boîtier (2, 3, 4) et qui peut être exposé au rayonnement lumineux de la lampe à ultraviolets (12).

8. Dispositif selon l'une quelconque des revendications précédentes, **caractérisé en ce qu'**un coussin élastique (61) est disposé entre l'extrémité de la lampe à ultraviolets (12) opposée au culot de raccordement (10) et la zone (4) du boîtier (2, 3, 4) adjacente à ladite extrémité.
